# EUROPEAN PATENT APPLICATION

(11) **EP 2 640 018 A1**
(43) Date of publication of application: **18.09.2013**
(21) Application number: 12159321.4
(22) Date of filing: 13.03.2012
(51) Int. Cl.: H04L 12/58, H04L 29/08, G06F 9/54

(54) **Protocol modeling & engineering system**

(71) Applicant: Alcatel-Lucent Deutschland AG, 70435 Stuttgart (DE)
(72) Inventor: Giouroukos, Pantelis, 90491 Nürnberg (DE); Tretter, Tobias, 90471 Nürnberg (DE)
(74) Representative: MERH-IP Matias Erny Reichl Hoffmann

(57) **Abstract**

A method for transmitting a message in a communication network, based on a message framework for modeling different message types, comprises the steps:
- providing a message framework in a markup language which defines a plurality of message types, wherein a message type comprises a plurality of structure elements which define an associated position and/or an associated size of message elements in a message;
- generating a message memory object from the message type, wherein the message memory object comprises a plurality of memory object elements, and wherein memory is allocated to the memory object elements according to the positions and/or sizes as defined by the corresponding structure elements of the message type;
- generating a message signal, wherein the message signal comprises a plurality of signal elements, and wherein the positions and/or the sizes of the signal elements in the message signal are defined by the corresponding structure elements of the message type; and
- transmitting the message signal in the communication network.

## Description

### Background

The present invention is concerned with improvements in the efficiency of message modeling, generation and transmission in communication networks.

Design tools such as UML (Unified Modeling Language) allow for the definition of general message structures, however, no exact prediction of the message constituent arrangement and size of the message in the memory or of the signal as transmitted via a communication link can be derived from an UML definition of a message structure.

It is thus an object of the present invention to provide a method and system, wherein the modeled message structure allows defining the exact message constituent arrangement and size of the message, and can thus be used directly for generating memory objects or for generating message signals for transmission in the communication network. It is a further object of the present invention to provide a method and system, wherein the model of a message structure can be used for decoding message signals which are received within the communication network.

### Summary

In some embodiments, a method for transmitting a message in a communication network, based on a message framework for modeling different message types is provided. The method may comprise providing a message framework in a markup language which defines a plurality of message types, wherein a message type comprises a plurality of structure elements which define an associated position and/or an associated size of message elements in a message. A message memory object may be generated from the message type, wherein the message memory object comprises a plurality of memory object elements, and wherein memory is allocated to the memory object elements according to the positions and/or sizes as defined by the corresponding structure elements of the message type. Further, a message signal may be generated, wherein the message signal comprises a plurality of signal elements, and wherein the positions and/or the sizes of the signal elements in the message signal are defined by the corresponding structure elements of the message type, and the message signal may be transmitted in the communication network.

The message framework thus allows modeling a set of message types, wherein the structure of a message type allows an accurate prediction of the size and layout of the corresponding message memory object and the corresponding message signal transmitted in the communication network. Thus, the physical properties of a message signal can be specified within a model that provides a high-level structural description of message types, e.g. for a given message protocol. Signal elements in the message signal may thus be directly specified by the corresponding structure elements of the message type, such that the message signal comprises a gap-free sequence of signal elements, wherein the length of a signal element corresponds exactly to the size specified in the corresponding structure element.

In some embodiments, the step of generating a message signal may comprise generating signal elements according to the definitions provided in the corresponding structure elements and writing message content into the signal elements. Thus, a message signal can be generated directly from the structural description of the message type in the markup language. The content can then be copied to the signal elements and the message signal can be transmitted in the communication network or stored at a memory of a network device.

In some embodiments, the step of generating a message memory object may comprise storing message content in the memory object elements. The step of generating the message signal may further comprise processing the message memory object such that the content stored in the memory object elements is written into the signal elements of the message signal, wherein the positions and/or the sizes of the content written into the signal elements are defined by the corresponding structure elements of the message type. Thus, a message memory object may be generated directly from the structural description of the message type in the markup language and a memory representation of the message content may be stored therein. Further, a message signal may be generated from such a content-filled memory object, and the content of the memory object may be copied to the message signal.

According to some embodiments, the step of generating a message memory object for a message type may comprise generating a parent message type defined by the message framework, wherein the parent message type comprises at least one structure element and a conditional statement. Depending on the conditional statement, at least one structure element may be added to the at least one structure element of the parent message type in order to generate a derived message type. Finally, a message memory object according to the derived message type may be generated. Thus, an inheritance concept may be implemented, wherein a large variety of derived message types can be generated which share a common parent message structure. A derived message type may be instantiated as a message memory object. A corresponding message signal may further be generated for the message memory object of the derived message type, and the message signal may be transmitted in the communication network.

According to some embodiments, the parent message type may comprise at least one payload structure element which defines a position within the parent message structure. The step of adding at least one structure element may comprise adding a structure element which defines the same position in the message structure as the payload structure element. Such a payload element allows for message types to be generated, which share e.g. a common header and footer, but which may comprise a variety of different type-specific structure elements in a position between the common header and footer.

The size defined by the payload structure element may be zero, and the added structure element may define a size larger than zero. Thus, the payload element may serve as a placeholder which allows inserting structure elements which define arbitrary sizes into the position defined by the placeholder payload element.

The parent message type may comprise at least one tag element, and decoding the conditional statement may comprise evaluating the content of the tag element. Thus, a specific message type can be generated by interpreting the content of the tag element. The tag element is provided at a defined position within the parent message structure and may have a defined size and data type, such that the content of the tag element can be decoded efficiently.

According to some embodiments, the message type may comprise at least one authentication element, which contains information related to authentication of the content of at least one signal element. Thus, authentication, such as e.g. a checksum or a hash value of the message, can be modeled within the message framework as part of the message structure. For the memory object and/or the message signal generated from such a message type structure, the layout and size of the authentication element are exactly defined.

According to some embodiments, at least one structure element may comprise an indication that the corresponding signal element has encrypted content. Thus, encryption can be modeled within the message framework as a property of a structure element, wherein the structure element may in turn be used for defining a variety of different encrypted message types.

According to some embodiments, a method for decoding a received message in a communication network, based on a message framework for modeling different message types is provided. The method may comprise providing a message framework in a markup language which defines a plurality of message types, wherein a message type comprises a plurality of structure elements which define an associated position and/or an associated size of message elements in a message. After receiving a message signal in a communication network, the message signal may be structured into signal elements according to the respective positions and sizes as defined by the structure elements of a message type. Subsequently, the content of the signal elements may be decoded according to information retrieved from the corresponding structure elements of the message type. A message memory object of the message type may be generated, wherein the message memory object comprises a plurality of memory object elements, and wherein memory is allocated to the memory object elements according to the positions and/or sizes as defined by the corresponding structure elements of the message type. Thus, the message framework provides an efficient tool for decoding received message signals, wherein information on positions and sizes of the received signal elements can be derived directly from the message structure constructed within the message framework. A message memory object may be instantiated for the received message, wherein the structure of the message memory object elements is defined within the message structure constructed within the message framework.

According to some embodiments, the step of structuring the message signal into signal elements may comprises generating a parent message type defined by the message framework, wherein the parent message type comprises at least one structure element and a conditional statement. The message signal may be structured into signal elements according to the parent message type and the conditional statement may be decoded. Depending on the conditional statement, at least one structure element may be added to the at least one structure element of the parent message type in order to generate a derived message type. Then, the message signal may be structured into signal elements according to the positions and/or sizes defined by the structure elements of the derived message type. Thus, a large variety of different message types can be generated which share a common parent message structure. Information provided in a received signal element can be used for determining which message type is to be instantiated, and thus the message structure for decoding the content of the received message signal can be generated efficiently while the received message signal is being read. Further, a message memory object may be generated for the derived message type, wherein the positions and sizes of the message memory object elements may be defined by the corresponding structure elements of the derived message type.

According to an embodiment, for at least one signal element, the information retrieved from the corresponding structure element may comprise encryption information. The step of decoding the content of the signal elements may comprise decrypting the content of the at least one signal element according to the retrieved encryption information. Thus, encrypted signal elements can be decoded efficiently using the information provided in the corresponding message structure elements.

According to some embodiments, a device for transmission and reception of messages in a communication network comprises a sender which is adapted for generation and transmission of messages according to the above-described transmission method and a receiver which is adapted for reception and decoding of messages according to the above-described reception method.

According to some embodiments, the sender and/or the receiver may be adapted to send and/or receive messages according to a plurality of different message protocols, wherein the structure of the messages is described in at least one message framework. The sender and/or the receiver may comprise a state machine for converting information received according to one message protocol into information for transmission according to a different message protocol. Thus, communication within the communication network using a plurality of different message protocols, physical links and message formats can be achieved efficiently within the message framework described above. For each message protocol, a protocol-specific message framework may be provided, or a single message framework may define the respective structures of different message types according to different message protocols.

The state machine may comprise a plurality of states, wherein at least one state may be associated with processing message types according to at least two different message protocols. Thus, processing steps which may be performed in the context of transmission and reception of messages according to more than one protocol may be performed efficiently within a single state of the state machine.

According to some embodiments, a device for modeling a message in a communication network, based on a message framework for modeling different message types is provided. The device may comprise a processor which is adapted for providing a message framework in a markup language which defines a plurality of message types. A message type may comprise a plurality of structure elements which define an associated position and/or an associated size of message elements in a message. Further, a message memory object may be generated from the message type, wherein the message memory object comprises a plurality of memory object elements, and wherein memory is allocated to the memory object elements according to the positions and/or sizes as defined by the corresponding structure elements of the message type. A message signal may be generated, wherein the message signal comprises a plurality of signal elements, and wherein the positions and/or the sizes of the signal elements in the message signal are defined by the corresponding structure elements of the message type.

Such a device provides an efficient tool for designing message structures and/or message protocols, as the message framework provides both a high-level description of the different message types and allows an accurate prediction of the structures and sizes of memory objects and message signals in the communication network. It is to be understood that the device may run a method for modeling a message in a communication network, which method comprises the above-described steps which are to be performed by the device's processor. The various aspects described above in conjunction with embodiments of the methods and devices for transmitting and receiving messages in a communication network may also be combined with the modeling device and method.

### Brief description of the drawings

In the following, embodiments of the present invention are explained in detail with reference to the accompanying drawings. Therein,
Fig. 1 is a schematic overview of an example for a communication network in which embodiments of the present invention can be implemented;
Fig. 2 illustrates the relationship between the message structure and the organization of the message data in the memory and in a signal during transmission according to an embodiment;
Fig. 3 explains the inheritance concept according to some embodiments which allows the generation of derived message types from a parent message type within the message framework;
Fig. 4 shows a first example of message type inheritance;
Fig. 5 shows a second example of message type inheritance;
Fig. 6 illustrates the payload concept used in an inheritance scheme according to some embodiments;
Fig. 7 shows an example of message type inheritance using the payload concept shown in Fig. 6;
Fig. 8 shows a first example of a message type incorporating a checksum;
Fig. 9 shows a second example of a message type incorporating a checksum;
Fig. 10 shows an example for message frameworks adapted to be used within different message protocols;
Fig. 11 shows an example of a communication network using two different message protocols;
Fig. 12 illustrates an example of a state machine which is adapted for communication using two different message protocols;
Fig. 13 shows an example for state machines in a communication network;
Fig. 14 shows a further example for state machines in a communication network; and
Fig. 15 shows an overview of a device which combines the methods shown in Fig. 2 to 9 and the state machine shown in Fig. 10 to 14.

### Detailed description

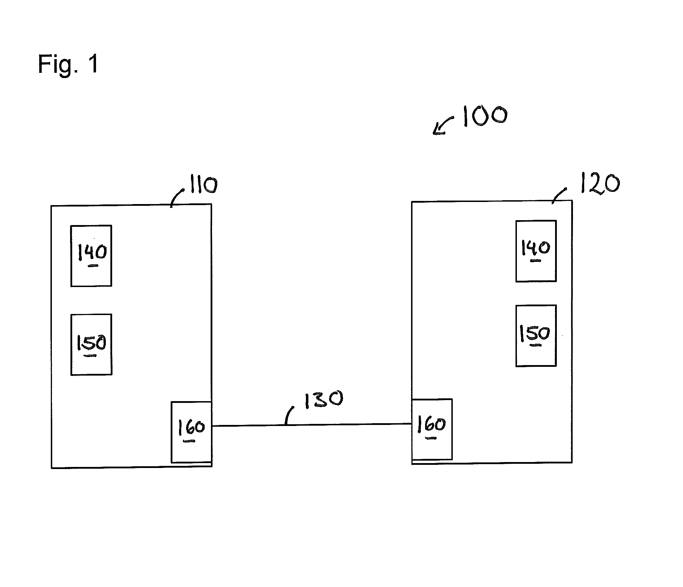

As shown in Fig. 1, a communication network 100 involves a sender device 110, a receiver device 120 and a communication link 130 between sender and receiver. The communication link 130 may comprise a wireless or a wired connection that is suitable for transfer of data. Each of the sender 110 and receiver 120 devices comprises a processor 140, a memory 150 and a communication subsystem 160.

When data (which may be voice data for a telephone call or any other type of data, including status updates and the like which is transmitted in the communication network 100) is to be sent via communication link 130, a message signal is generated which comprises the data in a format that the receiver 120 can decode. Thus, sender 110 and receiver 120 need to have a common protocol and use common data structures for transmission and reception.

The embodiments described below give various examples how to model such a common data structure, which allows for a large variety of message signals of different message types being generated, transmitted and decoded in an efficient manner. While a plurality of embodiments are described below, it is clear to a person skilled in the art that individual features from more than one embodiment may be combined in different ways and that the disclosure of the present document extends to every possible combination of features described in conjunction with the embodiments.

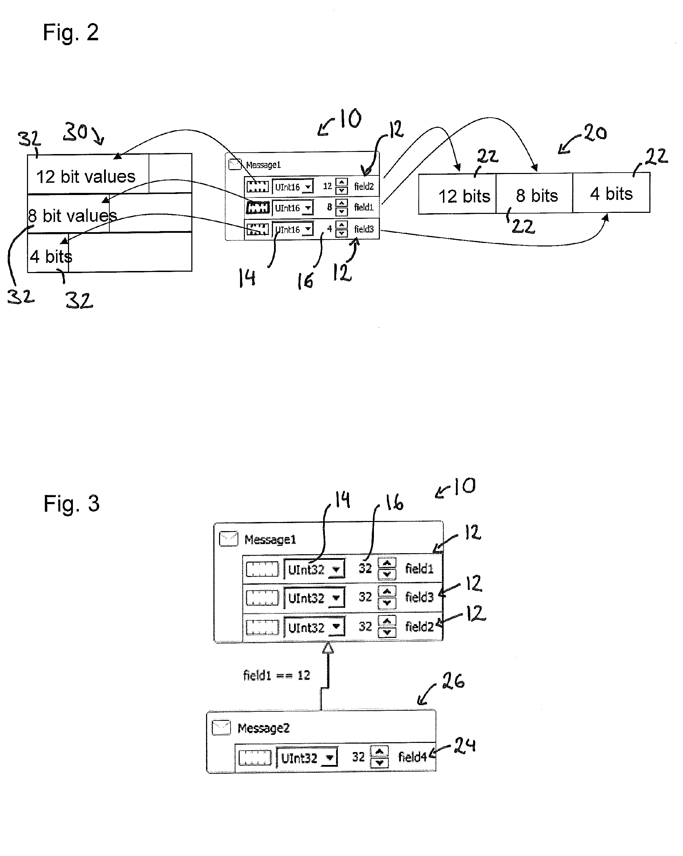

Fig. 2 illustrates a message structure 10 for use in some embodiments. The message structure 10 and further details, e.g. regarding transport details of messages in the communication network 100, can be defined in a message framework, which may be expressed in a markup language such as XML. A message framework allows for a variety of different message structures 10 to be generated, as will be explained in detail below. The message structure 10 comprises at least one structure element 12, wherein each structure element 12 defines an associated data type 14, an associated size 16 and a name 18. Additionally, each structure element 12 is assigned a position within the message structure 10, which at the same time defines the position of a corresponding element in a message signal 20 or a message memory object 30, as will be described below.

As indicated in the left part of Fig. 2, a message memory object 30 for a particular message type may be generated from message structure 10. The memory object 30 comprises at least one memory object element 32, wherein each memory object element 32 corresponds to a structure element 12. Thus, the size and the data type of the memory object element 32 may be defined by its corresponding structure element 12. The relative position of each memory object element 32 within the memory allocated to the memory object 30 may be determined according to the position defined by the corresponding structure element 12 within the message structure 10.

In the example shown in Fig. 2, the memory object 30 comprises three memory object elements 32, wherein each element is stored in a 16-bit word. Within each word, values may be stored, wherein the bit length of the stored value is specified by the size 16 defined by the corresponding structure element 12. If the bit length of a stored value is smaller than the length of the word reserved within the memory, the alignment of the value within the word may be defined by the architecture of the processor (e.g. by the endianness of the processor).

However, for the memory object 30, an exact correspondence between the positions of the memory object elements 32 and the structure elements 12 is not compulsory. In the example shown in Fig. 2, it would also be possible to combine e.g. the 4-bit values of more than one memory object 30 into a single 16-bit word in the memory, in order to achieve a more efficient use of memory space for the storage of a large number of memory objects 30.

As indicated in the right part of Fig. 2, the message structure 10 may further be used to generate a message signal 20, which comprises at least one signal element 22. Each signal element 22 corresponds to a structure element 12 of the message structure 10, wherein the size and the relative position of the signal element 22 within the message signal 20 are defined by the size 16 and the position defined by the corresponding structure element 12.

The message signal 20 may comprise fixed-size words which are determined by the transport properties of the communication link and specified within the message framework. However, the length and alignment of the signal elements 22 does not need to have any relation to the protocol-specific physical structure of the message signal 20. Instead, the bits of each signal element 22 can be arranged as a continuous sequence, with no gaps or fillers between adjacent signal elements 22. The length and position of a signal element 22 does not need to correspond to the length and position of any fixed-size word within the physical structure of the message signal 20. Hence, the message signal 20 may be an exact image of the message structure 10 defined in the message framework.

Thus, the message structure 10 allows an accurate prediction of the overall size and layout of the message signal 20 that is to be transmitted via the communication link 130. The message structure 10 further allows an accurate specification of the position of each signal element 22 within the message signal 20.

In the example shown in Fig. 2, the memory object 30 has 16-bit alignment, wherein padding is used to ensure a length of (multiples of) 16 bit for each memory object element 32, and the message signal 20 has 1-bit alignment, wherein the individual signal elements 22 are aligned in a sequence without any padding. However, according to some embodiments, the memory object and the message signal may have the same alignment, which may be defined in the message framework. Then, for the example shown in Fig. 2, a memory object with 16-bit alignment may correspond to a message signal with 16-bit alignment (not shown in Fig. 2), wherein padding is used in the same way as in the corresponding memory object in order to achieve a (multiple of) 16 bit length for each signal element. Similarly, a message signal with 1-bit alignment, as shown in Fig. 2, may correspond to a memory object with 1-bit alignment (not shown in Fig. 2), wherein content data is arranged as a bit stream without any intermediate padding.

Underlying the example message structure 10 as shown in Fig. 2 is a message framework, which provides information on how to model and generate message structures 10 for different message types according to predefined rules.

Thus, the message framework provides an accurate description of four different levels of a message within a communication network:
- the message framework provides information on the generation of a set of different message types according to predefined rules;
- for each message type, a message structure 10 is described, which defines the properties of the structure elements 12;

- a memory object 30 is described, wherein positions and sizes of memory object elements 32 are specified by the corresponding structure elements 12 of the message structure 10; and
- a message signal 20 is described, wherein positions and sizes of signal elements 22 as they are transmitted within the communication network 100 are specified by the corresponding structure elements 12 of the message structure 10.

For a given message type, the memory object 30 and the message signal 20 can be directly derived from the message structure 10, without the need for further specifications or further information regarding the layout of the memory object 30 and/or the message signal 20.

The message framework according to embodiments may thus be further used as a design tool in the development of message protocols and/or for the definition of data structures for messages that are to be transmitted and received within the communication network 100. The graphical representation of the message structure 10, as shown in Fig. 2, allows specifying the positions and sizes for each structure element 12 in an early stage of the design process, such that an accurate prediction of overall memory and transmission bandwidth usage of the message signals can be made during all stages of the development process.

The graphical representation of the message structure 10 shown in Fig. 2 provides a tool for the protocol designer which allows for a particularly easy overview over the message structure 10. The individual structure elements 12 may each be represented by their own graphical element, wherein a symbolic representation and information on position, data type and the element's name are shown. Thus, a high-level design tool is provided which offers information on the low-level properties of the message signal 20 that is to be transmitted within the communication network 100.

Underlying the graphical representation as shown in Fig. 2 is a markup language description of the message structure 10, wherein the content type, size and graphical display properties for each structure element 12 is described. An example for an XML description of a message structure 10 which comprises a string element and an integer element is shown below:
<node>
<id>12345</id>
<DisplayName>debug_request</DisplayName>
...
<Type>Messageltem</Type>
...
<node>
<id>123451</id>
<DisplayName>request</DisplayName>
...
<Type>Bitfieldltem</Type>
...
<FieldSize>0</FieldSize>
<FieldType>String</FieldType>
<Encoding>ASCII</Encoding>
<Termination>LengthField4Byte</Termination>
<Alignment>InheritFromProject</Alignment>
...
</node>
<node>
<id>123452</id>
<DisplayName>T</DisplayName>
...
<Type>BitfieldItem</Type>
...
<FieldSize>32</FieldSize>
<FieldType>UInt32</FieldType>
<Encoding>Unicode</Encoding>
<Termination>NullTerminated</Termination>
<Alignment>InheritFromProject</Alignment>
...
</node>
</node>

Thus, all properties shown in the graphical representation of the message structure 10 are coded as XML tags. In the XML example listed above, a message type with the ID "12345" comprises a first structure element with the ID "123451", which is displayed in the graphical representation of the message structure 10 with the name "request" and a second structure element with the ID "123452" which is displayed with the name "T". Both structure elements are of the type "BitFieldItem", and the message structure is of the type "Messageltem". The first structure element is an ASCII-encoded string of variable size, as defined in "Encoding", "FieldType" and "FieldSize" tags. The second structure element is a Unicode-encoded unsigned 32-bit integer of size 32 bit. Further, the termination and the alignment (e.g. 16/32/64bit) of the structure elements are defined.

In this example, the order of the two structure elements within the message structure 10 (and thus also the order of the corresponding message elements within the message signal 20) is defined by the order of the nodes in the XML description of the message structure. Alternatively, the order of the structure elements within the message structure 10 may be defined by a tag in the XML description and/or by information provided in the graphical representation of the message structure 10.

Thus, the high-level description of the graphical representation or the XML definition of the message structure 10 provides exact layout and sizing information for the memory object 30 and the message signal 20.

When a message signal 20 is received within the communication network 100, a message structure 10 for a specific message type may be generated within the message framework at the receiver end in order to decode the message signal 20. As the message structure 10 of the received message type defines the positions, types and sizes for each structure element 12, the received message signal may be divided into its signal elements 22 according to the positions and sizes defined by the structure elements 12. Subsequently, each signal element 22 may be interpreted using data type and encoding information provided in the corresponding structure element 12.

As shown in Fig. 3, the message framework according to some embodiments may further allow for an inheritance model for generating a plurality of different message structures for a set of different message types. A message type may be derived from a basic message structure 10 common to all types within a family of inheritance and additional type-specific structure elements 24. Thus, a plurality of different message types may be generated within the same message framework.

As shown in Fig. 3, a message structure 26 of a derived message type ("Message2") may be generated, which comprises all the structure elements 12 of the message structure 10 of the parent message ("Message1"), as well as the additional type-specific structure element 24, which may be added to the parent message structure 10. Within the message framework, conditions for instantiation of each derived message type may be defined, such that, depending on the content of predefined structure elements of the parent message structure 10, a specific derived message type 26 may be generated.

In the following discussion of the inheritance concept, the formulation "content of a structure element" is used as a shorthand for the content of the corresponding memory object element and/or the corresponding signal element, as it is to be understood that the structure element does not actually have its own content but only serves to define the structure and properties of the corresponding message memory object and/or signal elements.

In the example shown in Fig. 3, the condition for instantiation of a derived message 26 of type "Message2" is whether the value of the content of the "field1" structure element 12 of the parent message structure 10 is equal to 12. If this is the case, a message structure 26 of the message type "Message2" is generated, which comprises the structure elements "field1", "field3", "field2" and "field4". If this is not the case, i.e. if the value of the content of the "field1" structure element 12 of the parent message structure 10 is not equal to 12, then a parent message structure 10 may be generated, which comprises only the structure elements "field1", "field3" and "field2", or an error message may be generated.

This inheritance concept allows for a variety of different message types to be generated which share common set of parent elements 12 and which each have at least one type-specific additional message structure element 24. In the example shown in Fig. 3, the additional message structure element 24 is added at the bottom of the existing parent structure elements 12. This implies that, in a memory object generated for a message of type "Message2", the position of the memory object element which corresponds to the framework structure element "field4" may be specified to lie behind the memory object element that corresponds to the framework structure element "field2" in the last position of the parent framework structure 10. In the message signal that is to be transmitted within the communication network 100, the position of the signal component that corresponds to the framework structure element "field4" will be immediately behind the signal component that corresponds to the framework structure element "field2" of the parent message structure 10.

However, as will be shown below, additional message structure elements do not necessarily always have to be added at the bottom of the message structure 10. Instead, a particular position for insertion of the at least one additional type-specific element(s) into a parent message structure can be specified within the parent message structure 10.

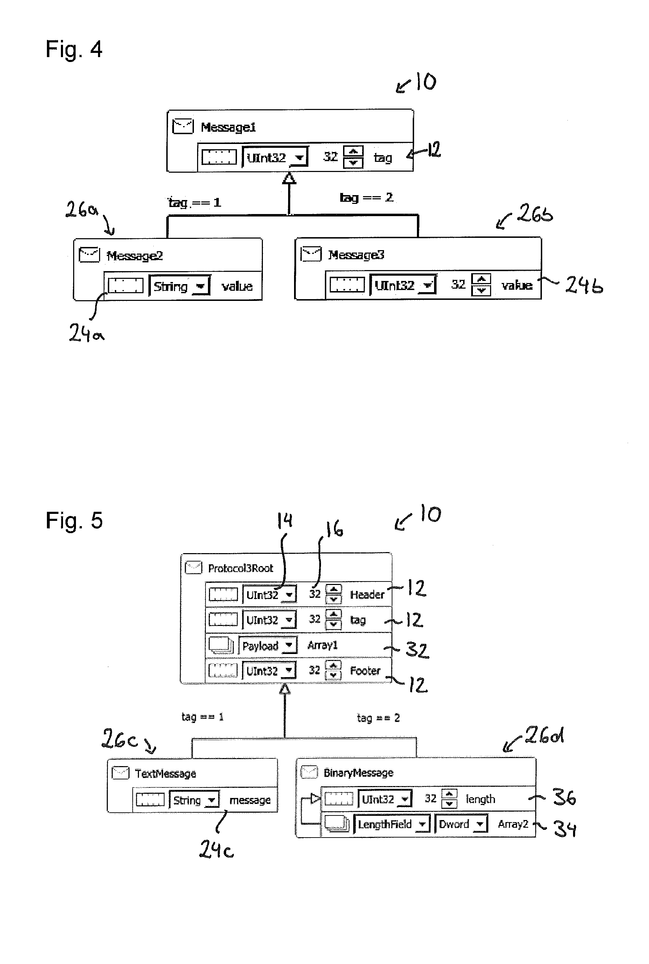

Fig. 4 shows a further example for generating different message types from the same parent message structure 10 according to some embodiments. Depending on the value of the content of the structure element "tag", a first derived message structure 26a of type "Message2" or a second derived message structure 26b of type "Message3" may be generated, and the corresponding type-specific structure element 24a or 24b is then attached to the bottom of the parent message structure 10.

The inheritance concept described above may also be used for the decoding of received message signals at a receiver 120 of the communication network 100. The receiver 120 reads the received message signal and decides depending on the content of the message elements which message type to instantiate. In the example shown in Fig. 4, the receiver 120 may receive a message signal via the communication link 130 and may then instantiate a message structure of type "Message1" in case the length of the received message signal is 32 bits and the element "tag" does not have a value of 1 or 2. Otherwise an error is reported. In case the received message signal is longer than 32 bits and the tag has the value 2, the receiver 120 expects another 32 bits (and no more or less) and a message structure of type "Message3" is instantiated. In case tag has the value 1, the receiver 120 instantiates a message structure of type "Message2" and tries to parse the remaining message as string. Of course error checking may be done in all cases.

The inheritance model according to some embodiments thus allows for received messages of different message types to be parsed using the same basic message structure 10 together with a set of inheritance conditions and rules defined within the message framework. The different message types may be instantiated directly during the decoding, according to information received within a signal element that corresponds to a structure element of the parent message structure 10. Thus, the received message signal can be decoded efficiently, as the positions, sizes and types of each signal element are defined within the message structure of the respective message type that can be instantiated during decoding of the message signal.

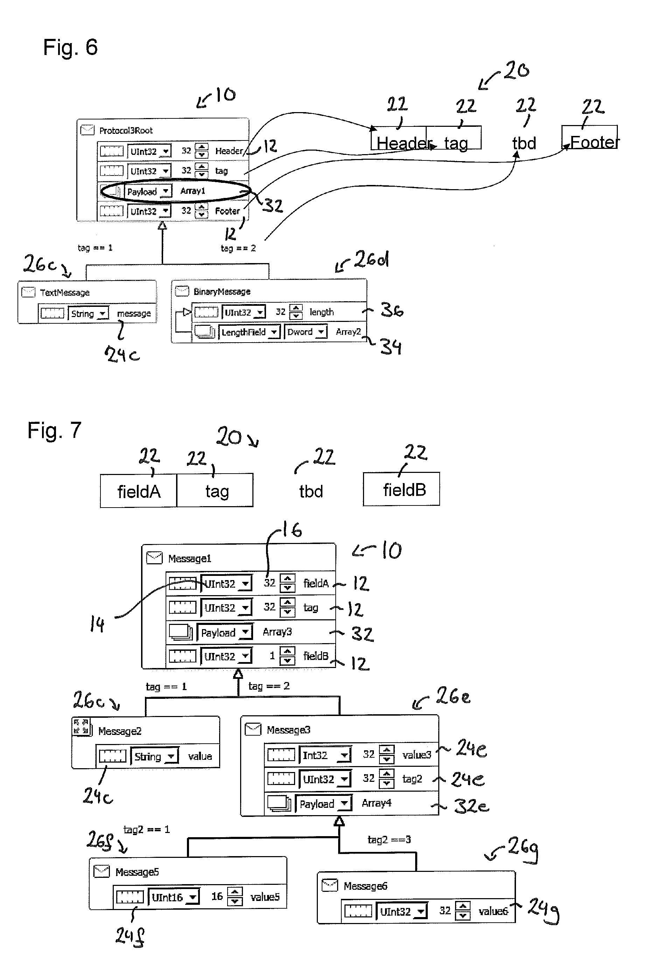

Fig. 5 and 6 show an example for an inheritance concept used with some embodiments, wherein a payload element 32 is defined in the parent message structure 10. The payload element 32 differs from the other structure elements 12 in that it does not define a size for the corresponding signal element, but serves as an insertion point for inserting further type-specific structure elements 24c, 24d at the position defined by the payload element 32 within the message structure of the derived message type. Depending on the value of the content of the "tag" element in the example, the empty space is filled up with either the "Text-" or the "Binary-" Message.

Thus, the payload element 32 allows to generate further message types, wherein type-specific structure elements 24c, 24d are inserted at a defined position within the message structure 10. The memory object and/or the message signal generated from such a message structure will then also contain the respective additional type-specific element(s) at the position defined by the payload element 32 and having the size as defined by the type-specific elements 24 of the derived message type.

In the example shown in Fig. 5, the parent message structure 10 "Protocol3Root" defines a "Header", a "tag" and a "Footer" structure element 12, wherein each of these structure elements 12 defines an associated data type 14, size 16, and position, which correspond to data types, sizes and positions of the elements of associated memory objects and message signals, as explained above in conjunction with Fig. 2. Between the "tag" and the "Footer" elements 12, a payload element 32 "Array1" is placed. Depending on the tag value in the "tag" element 12, a message structure 26c of the message type "TextMessage" or a message structure 26d of the message type "BinaryMessage" is instantiated.

If "tag" is equal to 1, a message structure 26c of type "TextMessage" is generated, wherein a string element 24c is inserted into the parent message structure 10 at the position defined by the payload element 32. If "tag" is equal to 2, a message structure 26d of type "BinaryMessage" is generated, wherein a structure element 34 is inserted into the parent message structure 10 at the position defined by the payload element 32. The size associated with the structure element 34 is defined by a structure element 36, which specifies a 32 bit integer "length" value which in turn defines the size of the subsequent "Array2" structure element 34.

Thus, the payload element 32 allows for a variety of message types to be generated, wherein additional type-specific elements are inserted into the parent message structure 10 at a defined position anywhere within the message, not necessarily at the end. This allows the parent message structure 10 to define a "frame", which may provide "header" and "footer" elements which are common to all message types derived from the same parent message structure 10.

In the example shown in Fig. 5, the message structure element 24c of the derived "TextMessage" type does not define an associated size. Thus, the structure element 24c allows for instantiating messages of a "TextMessage" type with variable sizes. When a memory object and/or a message signal is generated from the message structure 26c of the "TextMessage" type, the size of the memory or signal element that corresponds to the structure element 24c with an unspecified size may be set according to the size of the content of the "message" element. During decoding at the receiver 120, the size of the signal component corresponding to the string element 24c, "message", can be deducted from the known sizes of the remaining signal components, or, as shown in the XML description above, a termination value or bit sequence can be defined in the structure element 24c.

Fig. 7 shows a further example of generating a plurality of derived message types from a parent message structure 10 according to some embodiments, wherein a payload element 32 is used in order to define an insertion point for inserting additional type-specific structure elements. In the example, first the structure elements "fieldA", "tag" and "fieldB" are read and a message structure of type "Message1" is generated. In some embodiments, this may mean instantiation of a message memory object comprising the structure elements 12, 32 of the parent message structure 10. Alternatively, the parent message structure 10 may not be instantiated as a message memory object, but upon the encounter of a "tag" structure element, processing may continue in order to identify a derived message type without the parent message structure 10 ever getting instantiated.

If "tag" is equal to 1, a message structure 26c of type "Message2" is generated and the structure element 24c "value", a variable-size string, is inserted into the position defined by the payload element 32. The resulting message signal 20 is then generated as:

| | | | |
|---|---|---|---|
| fieldA | tag | Value | fieldB |

From the derived message structure of type "Message2", a message memory object and/or a message signal may be generated, as outlined above in conjunction with Fig. 2.

If "tag" is equal to 2, a message structure 26e of type "Message3" is generated, wherein the structure elements 24e "value3" and "tag2" and the further payload element 32e "Array4" are inserted into the message structure 10 at the position defined by the payload element 32 and the examination is continued. Again, as described above, the intermediate message structure 26e of type "Message3" may be instantiated as a message memory object and/or a message signal, or processing may continue in order to identify a further derived message type without the intermediate message structure 26e ever getting instantiated.

If "tag2" is equal to 1, a derived message structure 26f of type "Message5" is generated and the structure element 24f "value5", a 16 bit integer, is inserted into the position given by the payload element 32e of message structure 26e. The resulting message signal 20 is then generated as:

| | | | | | |
|---|---|---|---|---|---|
| fieldA | tag | value3 | tag2 | value5 | fieldB |

From the derived message structure 26f of type "Message5", a message memory object and/or a message signal may be generated, as outlined above in conjunction with Fig. 2.

If "tag2" is equal to 3, a message structure 26g of type "Message6" is generated and the structure element 24g "value6", a 32 bit integer, is inserted into the position given by the payload element 32e of message structure 26e. The resulting message signal 20 is then generated as:

| | | | | | |
|---|---|---|---|---|---|
| fieldA | tag | value3 | tag2 | value6 | fieldB |

From the derived message structure of type "Message6", a message memory object and/or a message signal may be generated, as outlined above in conjunction with Fig. 2.

In summary, the inheritance concept according to embodiments allows for a large variety of derived message types to be generated, which may share common structure elements of the respective parent and intermediate message types. Message structures may be built up from several intermediate levels, wherein message signals and/or memory objects are generated for the leaf nodes of a message structure tree. It is up to the implementation details of the message framework, whether all or some intermediate message types may be instantiated as message memory objects.

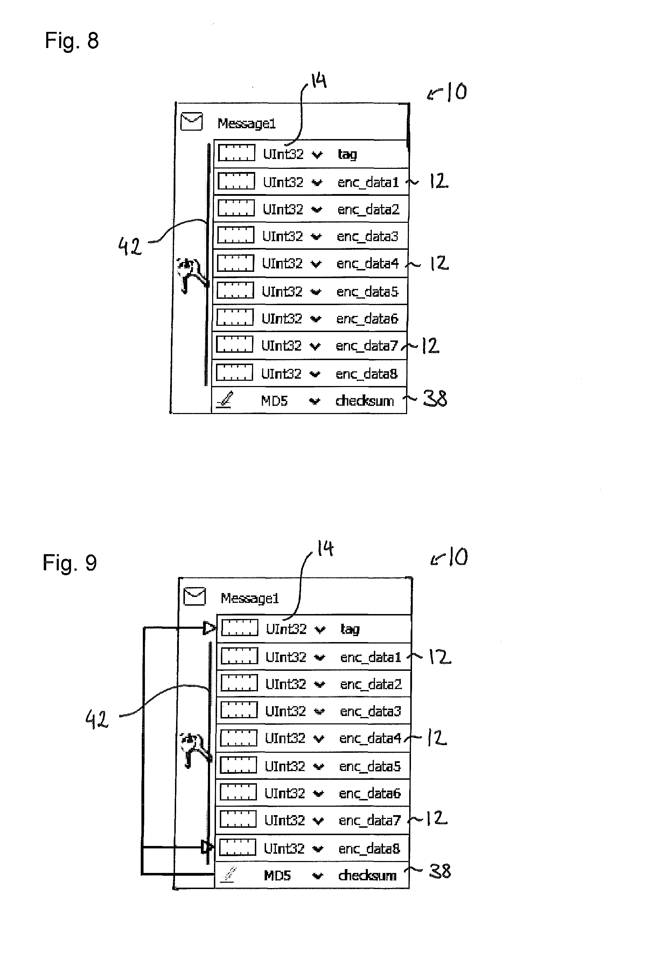

Some embodiments further allow for security aspects of a message, such as checksum or encryption information, to be modeled at the message structure level. Fig. 8 and 9 show examples for message structures 10, which each comprise a checksum element 38. The checksum element 38 may contain information 40 on the algorithm used for calculating the checksum. In the graphical representation shown in Fig. 8 and 9, this algorithm information 40 may be displayed similar to the data type information 14 for the other structure elements 12. The size of the checksum element 38 is defined implicitly by the algorithm information 40.

Thus, the checksum element 38 in the message structure 10 defines the properties of the checksum value provided in the corresponding message signal. As shown in Fig. 9, the checksum element 38 in the message structure may e.g. define over which elements the checksum calculation extends. Thus, during decoding of a message signal at the receiver 120, the received checksum value can be compared to a checksum value calculated according to the information provided in the checksum element 38 of the message structure 10. If the received checksum value is equal to the calculated value, the receiver can verify that the message signal has not been tampered with.

Further, the message structure elements 12 shown in Fig. 8 and 9 may be adapted to contain encrypted data. In the graphical representation, encryption of the data in a framework structure element 12 is shown as a graphic indication 42, i.e. as a property of the structure element 12. In the underlying XML representation, encryption information is defined as part of the attributes of the corresponding structure element 12. The encryption information may comprise information on the encryption algorithm, identification information on the encryption keys and the like. Some encryption algorithms demand specific data properties (such as predefined word lengths), and hence the data may need to be converted into a suitable format before encryption. Information on such data properties and conversion methods may also be included in the structure element 12. Alternatively, the message framework may provide general information on encryption algorithms which apply to all encrypted structure elements.

During decoding of a message signal at the receiver 120, the message structure generated by the receiver for the received message type comprises the encryption information listed above. Thus, the receiver 120 can decrypt the content of the corresponding signal element using the encryption information provided in the corresponding structure element or at a different location within the message framework and using the correct decryption key, which may be stored in the memory 140 of the receiver 120 or which may be provided by the user or by a different message signal within the communication network 100.

In this respect, it may be noted that some encryption algorithms use a predefined block size. If the data which is to be encrypted does not conform to this block size, it may need to be expanded to the next largest, suitable block size (padding), and the corresponding size defined by the structure element 12 may need to be adjusted accordingly. During decryption, the padding may be removed in order to obtain the original bit stream. The automated adding and removal of such padding, and the implications for the respective sizes of signal and/or memory object elements may be implemented within the message framework according to some embodiments.

Thus, security and encryption can be handled within the message framework as part of the message structure 10. Thus, a single message framework allows the modeling of message structures for a large variety of message types with and without authentication (via checksums, hashes or the like) and/or encryption properties.

Some embodiments may further comprise a method and a network device for handling communication within more than one message protocol. In addition to defining protocol-specific message structures, different protocols may further comprise different transport details and different physical settings regarding the communication channel. A client/server application needs to have the same physical settings on both client and server. For each message protocol, there may be an association between the messages and the state machine that uses them. Transport details like protocol types and port numbers are integral parts of this association. Thus, for the message framework according to some embodiments, transport details and further details of the state machine may be included in the message structures used for generating and/or decoding message signals. Thus, the message framework according to some embodiments may not only specify the layout and size of the message signal as it is transmitted within the network, but may further comprise association details which specify transport details specific to the protocol and the communication channel used.

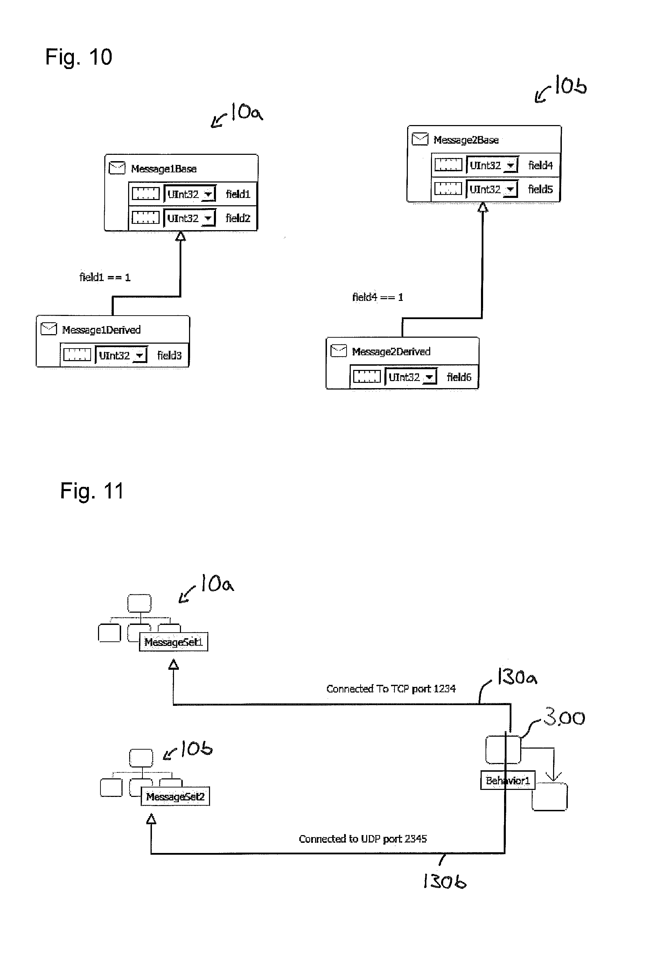

As shown in Fig. 10, different message frameworks may be used for generating different message structure sets 10a, 10b within the context of more than one protocol, such as e.g. a REST interface or TCP. Within each protocol, a message structure 10a, 10b may be defined and messages of various different types may be instantiated, as indicated by the derived message types "Message1Derived" and "Message2Derived" in Fig. 10. Thus, each protocol-specific message framework defines a set of message types specific to the protocol, as well as behavior information for the protocol. For each message type, corresponding memory objects and message signals may be generated as described above in conjunction with Figs 2-9.

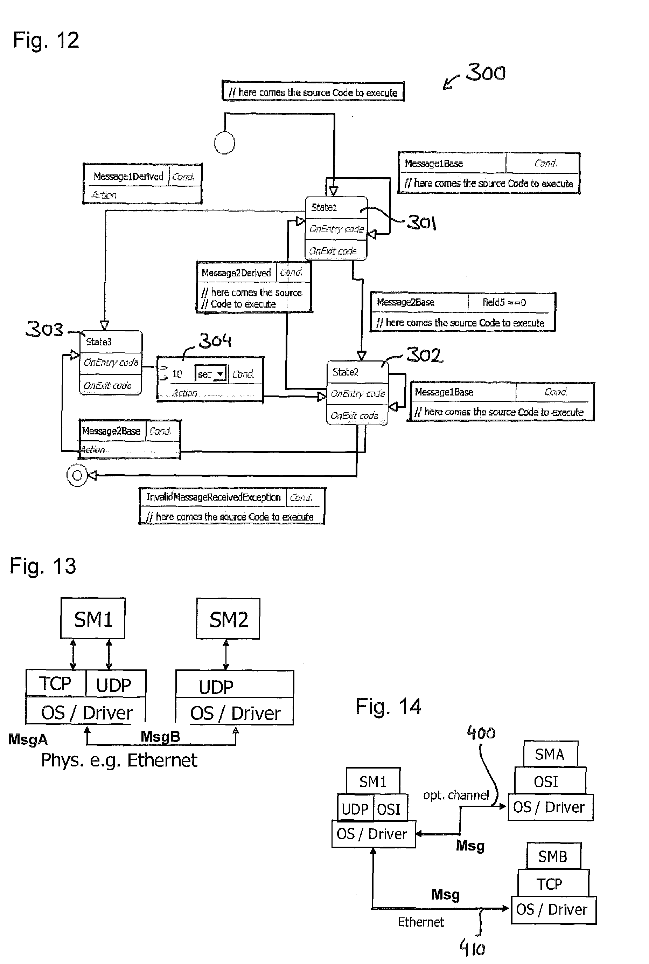

Fig. 11 shows an example of a model of a network device, which is adapted to transmit, receive and process messages according to both the first protocol (which defines different message types of "MessageSet1") and the second protocol (which defines different message types from "MessageSet2"). Therein, each protocol is associated with a different communication link 130, such as e.g. a TCP connection 130a and a UDP connection 130b. At the network device, the messages according to the two different protocols are received at different ports, such as e.g. at TCP port 1234 and at UDP port 2345 in the illustrated example. The network device may comprise a state machine 300 for handling messages of more than one protocol, as shown in Fig. 12.

The state machine 300 shown in Fig. 12 may comprise a plurality of states 301, 302, 303, which each comprise an entry action and an exit action. The state machine 300 is constructed such that each state may be associated with more than one protocol. Thus, the entry and exit actions defined for a state 301, 302, 303 allow to efficiently define processing steps which are to be performed identically for different protocols.

In the example shown in Fig. 12, the state machine 300 starts in State1 and performs the associated entry action for State1. Upon receipt of a message of the type "Message1Base" according to the first protocol, the state machine remains in State1 and performs the associated exit action for State1 followed by the entry action for State1. Receiving a message of the type "Message2Base" according to the second protocol or receiving a message of the type "Message1Derived" according to the first protocol in State1 lead to state transitions into State2 or State3, respectively, wherein the associated exit actions of the previous state and the entry actions of the new state are performed.

State transitions may also be triggered by events which have no direct relation to the receipt of a message according to a specific type and a specific protocol. As shown at 304, a transition from State3 to State2 is triggered by a timer, wherein State2 is entered whenever State3 has been active for a time period of 10 seconds.

Fig. 13 and 14 show further examples of the multiprotocol concept according to some embodiments. In the example shown in Fig. 13, a state machine SM1 is configured to transmit and receive messages over a physical connection, such as e.g. an Ethernet connection using two different protocols, which each define a protocol-specific message set MsgA, MsgB. In case of a protocol converter, the server has to accept data from different sources. In that case, SM1 expects MsgA according to a first protocol, such as e.g. TCP, which defines a first set of association details, and MsgB according to a second protocol, such as e.g. UDP, which defines a second set of association details, to communicate with SM2.

In the example shown in Fig. 13, the state machine SM1 thus serves as a protocol converter which receives a first message MsgA via TCP from a first source (not shown), converts this message into MsgB, and sends MsgB to SM2 via UDP. SM1 may comprise a state machine as shown in Fig. 12, wherein at least one state may be associated with the processing of messages MsgA, MsgB according to both protocols.

In the example shown in Fig. 14, different state machines SM1, SMA, SMB communicate with each other via different communication links 400, 410 (optical data channel and Ethernet connection). In this example, SM1 serves as a protocol converter, which accepts data from different sources and has to communicate with clients SMA, SMB using a common message set (Msg) but different physical layers 400, 410. SM1 comprises a state machine 300 as shown in Fig. 12 for receiving, decoding and transmitting messages received via optical channel 400 with a first set of association details regarding transport details and physical settings and messages received via Ethernet 410 with a second set of association details regarding transport details and physical settings. Thus, in this example, even though a common message set Msg is used, the message framework used at SMA and at SMB, respectively, may comprise different association details depending on the communication channel 400, 410. Further, a state machine 200 as shown in Fig. 12 may be provided for converting a message provided with one set of association details to a message associated with a second set of association details.

It is to be noted that the presently described method is not limited to the protocols and layers shown, but may be used for communications according to a large variety of protocols and on any layer in the Open Systems Interconnection (OSI) model from layer 2 (data link layer) upwards.

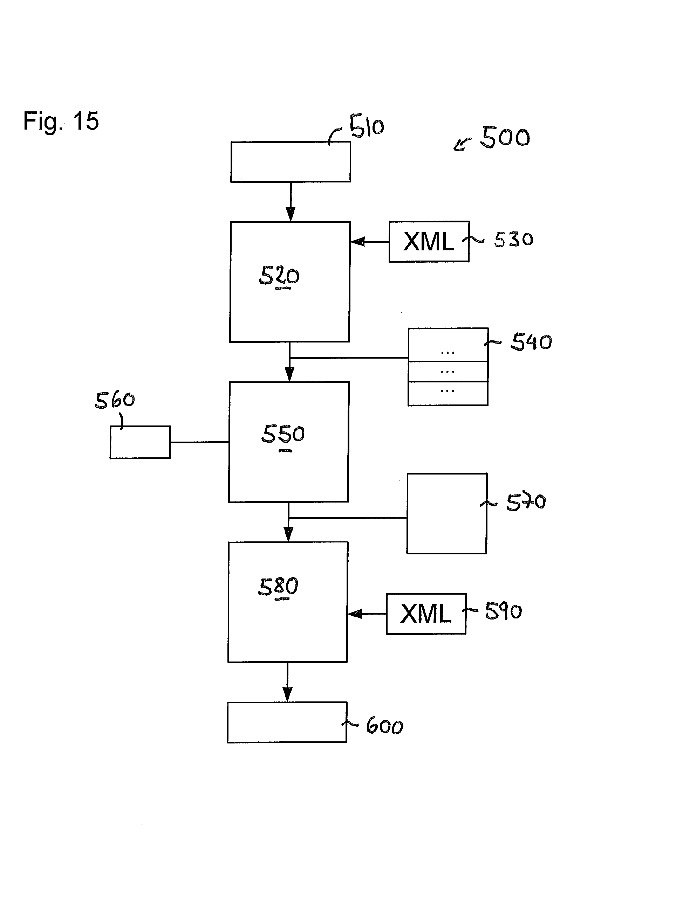

Fig. 15 shows an example of a network communication device 500, which may use a combination of the methods and features described above in conjunction with various embodiments. When a message signal 510 according to a first message protocol is received at a receiver subsystem 520 of the device 500, a first message framework 530 for this message protocol may be used for decoding the message signal 510, as described above. The first message framework 530 may comprise an XML description of a plurality of message types and of physical transport properties and settings used within the first message protocol.

From the message signal 510 and from information within the message framework 530, the message type may thus be identified as described above e.g. in conjunction with Fig. 4, and a message memory object 540 may be generated. Therein, the content of the signal elements of the message signal may be stored in corresponding memory object elements, wherein the positions and sizes of the memory object elements are associated with the positions and sizes as defined within the XML message framework 530 for the received message type.

The message memory object 540 may be passed on for further processing to a state machine 550. According to the processing rules defined for the state machine 550, the content of the message memory object 540 may be evaluated, further data 560 may be retrieved from the memory of the device 500 or from other sources, and a processed file 570 may be generated. Therein, the message framework 530 which describes the structure of the memory object 540 may be used.

The processed file 570 may subsequently be used by a sender subsystem 580 of the device 500 to generate a message signal 600 according to a second message protocol, which is described in a second message framework 590. The generation and transmission of the message signal 600 of a specific message type, as defined within the second message framework 590, may be performed as described above in conjunction with Fig. 2.

The state machine 550 may be integrated with either the receiver 520 and/or the sender 580 subsystem, and the state machine 550 may further access the first and/or the second message frameworks 530, 590 in order to process the message memory object 540 and generate the processed file 570.

The above-described method, system and devices provide the advantage of allowing for messages to be generated and decoded efficiently within a communication network. The message framework provides at the same time a high-level description of overall message layout, as well as an accurate description of the message layout and size in the memory and on the wire. For decoding, the message framework provides an efficient tool for identifying and parsing individual components of a received message signal. Information on encryption and/or authentication properties of the received message signal may be included as part of the message framework, so that an accurate prediction of authentication and encryption elements within a message signal on the wire may be provided and that decoding of encrypted messages and/or messages with authentication elements can be performed efficiently.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method for transmitting a message in a communication network, based on a message framework for modeling different message types, comprising the steps:
- providing a message framework in a markup language which defines a plurality of message types, wherein a message type comprises a plurality of structure elements which define an associated position and/or an associated size of message elements in a message;
- generating a message memory object from the message type, wherein the message memory object comprises a plurality of memory object elements, and wherein memory is allocated to the memory object elements according to the positions and/or sizes as defined by the corresponding structure elements of the message type;
- generating a message signal, wherein the message signal comprises a plurality of signal elements, and wherein the positions and/or the sizes of the signal elements in the message signal are defined by the corresponding structure elements of the message type; and
- transmitting the message signal in the communication network.

2. Method according to claim 1, wherein the step of generating a message signal comprises generating signal elements according to the definitions provided in the corresponding structure elements and writing message content into the signal elements.

3. Method according to claim 1, wherein the step of generating a message memory object comprises storing message content in the memory object elements; and wherein the step of generating the message signal comprises processing the message memory object such that the content stored in the memory object elements is written into the corresponding signal elements of the message signal, wherein the positions and/or the sizes of the content written into the signal elements are defined by the corresponding structure elements of the message type.

4. Method according to claim 1, wherein the step of generating a message memory object for a message type comprises:
- generating a parent message type defined by the message framework, wherein the parent message type comprises at least one structure element and a conditional statement;
- depending on the conditional statement, adding at least one structure element to the at least one structure element of the parent message type in order to generate a derived message type; and
- generating a message memory object according to the derived message type.

5. Method according to claim 4, wherein the parent message type comprises at least one payload structure element which defines a position within the parent message structure, and wherein the step of adding at least one structure element comprises adding a structure element which defines the same position in the message structure as the payload structure element.

6. Method according to claim 5, wherein the size defined by the payload structure element is zero, and wherein the added structure element defines a size larger than zero.

7. Method according to claim 4, wherein the parent message type comprises at least one tag element, wherein decoding the conditional statement comprises evaluating the content of the tag element.

8. Method according to claim 1, wherein the message type comprises at least one authentication element, which contains information related to authentication of the content of at least one signal element.

9. Method according to claim 1, wherein at least one structure element comprises an indication that the corresponding signal element has encrypted content.

10. Method for decoding a received message in a communication network, based on a message framework for modeling different message types, comprising the steps:
- providing a message framework in a markup language which defines a plurality of message types, wherein a message type comprises a plurality of structure elements which define an associated position and/or an associated size of message elements in a message;
- receiving a message signal in a communication network;
- structuring the message signal into signal elements according to the respective positions and sizes as defined by the structure elements of a message type;
- decoding the content of the signal elements according to information retrieved from the corresponding structure elements of the message type; and
- generating a message memory object of the message type, wherein the message memory object comprises a plurality of memory object elements, and wherein memory is allocated to the memory object elements according to the positions and/or sizes as defined by the corresponding structure elements of the message type.

11. Method according to claim 10, wherein the step of structuring the message signal into signal elements comprises:
- generating a parent message type defined by the message framework, wherein the parent message type comprises at least one structure element and a conditional statement;
- structuring the message signal into signal elements according to the parent message type and decoding the conditional statement;
- depending on the conditional statement, adding at least one structure element to the at least one structure element of the parent message type in order to generate a derived message type; and
- structuring the message signal into signal elements according to the positions and/or sizes defined by the structure elements of the derived message type.

12. Method according to claim 10, wherein, for at least one signal element, the information retrieved from the corresponding structure element comprises encryption information, and wherein the step of decoding the content of the signal elements comprises decrypting the content of the at least one signal element according to the retrieved encryption information.

13. Device for transmission and reception of messages in a communication network, comprising:
- a sender which is adapted for generation and transmission of messages according to the method of claim 1; and
- a receiver which is adapted for reception and decoding of messages according to the method of claim 10.

14. Device according to claim 13, wherein the sender and/or the receiver are adapted to send and/or receive messages according to a plurality of different message protocols, wherein the structure of the messages is described in at least one message framework, and wherein the sender and/or the receiver comprise a state machine for converting information received according to one message protocol into information for transmission according to a different message protocol.

15. Device according to claim 14, wherein the state machine comprises a plurality of states, and wherein at least one state is associated with processing message types according to at least two different message protocols.

16. Device for modeling a message in a communication network, based on a message framework for modeling different message types, wherein the device comprises a processor which is adapted for:
- providing a message framework in a markup language which defines a plurality of message types, wherein a message type comprises a plurality of structure elements which define an associated position and/or an associated size of message elements in a message;
- generating a message memory object from the message type, wherein the message memory object comprises a plurality of memory object elements, and wherein memory is allocated to the memory object elements according to the positions and/or sizes as defined by the corresponding structure elements of the message type; and
- generating a message signal, wherein the message signal comprises a plurality of signal elements, and wherein the positions and/or the sizes of the signal elements in the message signal are defined by the corresponding structure elements of the message type.

## Amended claims

### Amended claims in accordance with Rule 137(2) EPC.

**1.** Method for modeling messages in a communication network (100), based on a message framework for developing message protocols, comprising the steps:
- providing a message framework in a markup language which defines a plurality of message types (10), wherein a message type (10) comprises a plurality of structure elements (12) which define an associated position and/or an associated size of message elements in a message;
- generating a message memory object (30) from the message type (10), wherein the message memory object (30) comprises a plurality of memory object elements (32), and wherein memory is allocated to the memory object elements (32) according to the positions and/or sizes as defined by the corresponding structure elements (12) of the message type (10);
- generating a message signal (20), wherein the message signal (20) comprises a plurality of signal elements (22), and wherein the positions and/or the sizes of the signal elements (22) in the message signal (20) are defined by the corresponding structure elements (12) of the message type (10); and
- transmitting the message signal (20) in the communication network (100).

**2.** Method according to claim 1, wherein the step of generating a message signal (20) comprises generating signal elements (22) according to the definitions provided in the corresponding structure elements (12) and writing message content into the signal elements (22).

**3.** Method according to claim 1, wherein the step of generating a message memory object (30) comprises storing message content in the memory object elements (32); and wherein the step of generating the message signal (20) comprises processing the message memory object (30) such that the content stored in the memory object elements (32) is written into the corresponding signal elements (22) of the message signal (20), wherein the positions and/or the sizes of the content written into the signal elements (22) are defined by the corresponding structure elements (12) of the message type (10).

**4.** Method according to claim 1, wherein the step of generating a message memory object (30) for a message type (10) comprises:
- generating a parent message type (10) defined by the message framework, wherein the parent message type (10) comprises at least one structure element (12) and a conditional statement;
- depending on the conditional statement, adding at least one structure element (24) to the at least one structure element (12) of the parent message type (10) in order to generate a derived message type (26); and
- generating a message memory object (30) according to the derived message type (26).

**5.** Method according to claim 4, wherein the parent message type (10) comprises at least one payload structure element (32) which defines a position within the parent message structure (10), and wherein the step of adding at least one structure element (24) comprises adding a structure element (24) which defines the same position in the message structure (10, 26) as the payload structure element (32).

**6.** Method according to claim 5, wherein the size defined by the payload structure element (32) is zero, and wherein the added structure element (24) defines a size larger than zero.

**7.** Method according to claim 4, wherein the parent message type (10) comprises at least one tag element (12), wherein decoding the conditional statement comprises evaluating the content of the tag element (12).

**8.** Method according to claim 1, wherein the message type (10) comprises at least one authentication element (38), which contains information related to authentication of the content of at least one signal element (22).

**9.** Method according to claim 1, wherein at least one structure element (12) comprises an indication (42) that the corresponding signal element (22) has encrypted content.

**10.** Method for modeling received messages in a communication network (100), based on a message framework for developing message protocols, comprising the steps:
- providing a message framework in a markup language which defines a plurality of message types (10), wherein a message type (10) comprises a plurality of structure elements (12) which define an associated position and/or an associated size of message elements in a message;
- receiving a message signal (20) in a communication network (100);
- structuring the message signal (20) into signal elements (22) according to the respective positions and sizes as defined by the structure elements (12) of a message type (10);
- decoding the content of the signal elements (22) according to information retrieved from the corresponding structure elements (12) of the message type (10); and
- generating a message memory object (30) of the message type (10), wherein the message memory object (30) comprises a plurality of memory object elements (32), and wherein memory is allocated to the memory object elements (32) according to the positions and/or sizes as defined by the corresponding structure elements (12) of the message type (10).

**11.** Method according to claim 10, wherein the step of structuring the message signal (20) into signal elements (22) comprises:
- generating a parent message type (10) defined by the message framework, wherein the parent message type (10) comprises at least one structure element (12) and a conditional statement;
- structuring the message signal (20) into signal elements (22) according to the parent message type (10) and decoding the conditional statement;
- depending on the conditional statement, adding at least one structure element (24) to the at least one structure element (12) of the parent message type (10) in order to generate a derived message type (26); and
- structuring the message signal (20) into signal elements (22) according to the positions and/or sizes defined by the structure elements (24) of the derived message type (26).

**12.** Method according to claim 10, wherein, for at least one signal element (22), the information retrieved from the corresponding structure element (12) comprises encryption information, and wherein the step of decoding the content of the signal elements (22) comprises decrypting the content of the at least one signal element (22) according to the retrieved encryption information.

**13.** System for transmission and reception of messages in a communication network (100), comprising:
- a sender (110) which is adapted for generation and transmission of messages according to the method of claim 1; and
- a receiver (120) which is adapted for reception and decoding of messages according to the method of claim 10.

**14.** System according to claim 13, wherein the sender (110) and/or the receiver (120) are adapted to send and/or receive messages according to a plurality of different message protocols, wherein the structure of the messages is described in at least one message framework, and wherein the sender (110) and/or the receiver (120) comprise a state machine (300) for converting information received according to one message protocol into information for transmission according to a different message protocol.

**15.** System according to claim 14, wherein the state machine (300) comprises a plurality of states, and wherein at least one state is associated with processing message types (10) according to at least two different message protocols.

**16.** Device for modeling a message in a communication network (100), based on a message framework for modeling different message types, wherein the device comprises a processor which is adapted for:
- providing a message framework in a markup language which defines a plurality of message types (10), wherein a message type (10) comprises a plurality of structure elements (12) which define an associated position and/or an associated size of message elements in a message;
- generating a message memory object (30) from the message type (10), wherein the message memory object (30) comprises a plurality of memory object elements (32), and wherein memory is allocated to the memory object elements (32) according to the positions and/or sizes as defined by the corresponding structure elements (12) of the message type (10); and
- generating a message signal (20), wherein the message signal (20) comprises a plurality of signal elements (22), and wherein the positions and/or the sizes of the signal elements (22) in the message signal (20) are defined by the corresponding structure elements (12) of the message type (10).
